# EUROPEAN PATENT SPECIFICATION

(11) **EP 4 113 973 B1**
(45) Date of publication and mention of the grant of the patent: **25.12.2024**
(21) Application number: 21929211.7
(22) Date of filing: 14.12.2021
(51) Int. Cl.: B60R 1/20, G07C 5/00, G08G 1/00, G08G 1/16, H04N 7/18, G06V 20/59

(54) **VEHICULAR RECORDING CONTROL DEVICE AND RECORDING CONTROL METHOD**
FAHRZEUGAUFZEICHNUNGSSTEUERUNGSVORRICHTUNG UND AUFZEICHNUNGSSTEUERUNGSVERFAHREN
DISPOSITIF DE COMMANDE D'ENREGISTREMENT DE VÉHICULE ET PROCÉDÉ DE COMMANDE D'ENREGISTREMENT

(30) Priority: 05.03.2021 JP 2021035407; 24.09.2021 JP 2021155498
(43) Date of publication of application: 04.01.2023
(73) Proprietor: JVCKenwood Corporation, Yokohama-shi, Kanagawa 2210022 (JP)
(72) Inventor: SAKAI, Yasutoshi, Yokohama-shi, Kanagawa 221-0022 (JP); HAYASHI, Keita, Yokohama-shi, Kanagawa 221-0022 (JP); TANIYAMA, Hirofumi, Yokohama-shi, Kanagawa 221-0022 (JP)
(74) Representative: Wimmer, Hubert
(86) International application number: PCT/JP2021/046027
(87) International publication number: WO 2022/185653

(56) References cited:
- JP-A- 2021 034 975
- JP-A- 2021 047 675
- US-A1- 2018 012 085
- US-A1- 2020 043 254

## Description

### Field

The present invention relates to an on-vehicle recording control device and a recording control method.

### Background

An accident, such as a collision, of a vehicle with another vehicle running ahead is usually caused by inattention of a driver. The driver may become inattentive by being affected by motion of an occupant. Further, if a collision with the vehicle running ahead occurs due to inattention or a collision is avoided due to hard braking, it is often the case that the vehicle is traveling at a low speed with a short inter-vehicle distance during the traveling. In some cases, the state as described above is not detected as an event because acceleration applied to the vehicle may be small. A system that records a situation around a subject vehicle as a vehicle exterior image when face orientations of occupants are the same has been disclosed (for example, see JP 2014-096632 A) . Furthermore, US 2020/0043254 A1 discloses a data storage device mounted on a vehicle, wherein an abnormality is detected based on occupant monitoring and line-of-sight recognition.

### Summary

### Technical Problem

Even if the technology as described above is adopted to, for example, a drive recorder, it is difficult to accurately determine a causal relationship between an accident and an event in which orientations of faces of occupants in a vehicle are the same. Therefore, in some cases, it may be difficult to clarify a cause of the accident.

The present disclosure has been conceived in view of the foregoing situation, and an object of the present disclosure is to appropriately record an event, such as an accident, which is caused by inattention of a driver of a vehicle, in addition to a cause of the event.

### Solution to Problem

In accordance with the present invention, an on-vehicle recording control apparatus and a recording control method as set forth in the appended claims is provided. In particular, to solve the above problem and achieve the above object, an on-vehicle recording control apparatus according to the present disclosure comprising: a video data acquisition unit that acquires first video data and second video data, the first video data being captured by a first imaging unit that captures an image of surroundings of a vehicle, the second video data being captured by a second imaging unit that captures an image of inside of the vehicle; an orientation detection unit that detects, from the second video data, an orientation of one of a face and a line of sight of a driver of the vehicle, and determines whether a first condition that the driver faces a direction other than a traveling direction of the vehicle is met; an event detection unit that detects an event associated with acceleration that is applied to the vehicle; and a recording control unit that, if an event is detected, stores first video data including at least an event detection time point as event recording data, wherein if the orientation detection unit determines that the first condition is met, the on-vehicle recording control device performs one of a process a), a process b), and a combination of the process a) and the process b), where a) the recording control unit adds an event recording start flag to the first video data, and if an event is detected while the first condition is met, the recording control unit stores, as the event recording data, the first video data from the event recording start flag to at least the event detection time point, and b) the event detection unit reduces a threshold for the acceleration for detecting an event and then detects an event.

A recording control method according to the present disclosure implemented by an on-vehicle recording control apparatus, the recording control method comprising: a video data acquisition step of acquiring first video data and second video data, the first video data being captured by a first imaging unit that captures an image of surroundings of a vehicle, the second video data being captured by a second imaging unit that captures an image of inside of the vehicle; an orientation detection step of detecting, from the second video data, an orientation of one of a face and a line of sight of a driver of the vehicle, and determining whether a first condition that the driver faces a direction other than a traveling direction of the vehicle is met; an event detection step of detecting an event associated with acceleration that is applied to the vehicle; and a recording control step of storing, if an event is detected, first video data including at least an event detection time point as event recording data, wherein if it is determined, at the orientation detection step, that the first condition is met, one of a process a), a process b), and a combination of the process a) and the process b) is performed, where a) the recording control step includes adding an event recording start flag to the first video data, and if an event is detected while the first condition is met, the recording control step includes storing, as the event recording data, the first video data from the event recording start flag to at least the event detection time point, and b) the event detection step includes reducing a threshold for the acceleration for detecting an event and then detecting an event. Advantageous Effects of Invention

According to the present disclosure, it is possible to appropriately record an event, such as an accident, which is caused by inattention of a driver of a vehicle, in addition to a cause of the event.

### Brief Description of Drawings

FIG. 1 is a block diagram illustrating a configuration example of an on-vehicle recording apparatus including a control device according to a first embodiment.
FIG. 2 is a flowchart illustrating an example of the flow of a process performed by the control device according to the first embodiment.
FIG. 3 is a flowchart illustrating an example of the flow of a process performed by a control device according to a second embodiment.
FIG. 4 is a flowchart illustrating an example of the flow of a process performed by a control device according to a third embodiment.

### Description of Embodiments

Embodiments of an on-vehicle recording control apparatus according to the present disclosure will be described in detail below with reference to the accompanying drawings. The present invention is not limited by the embodiments below.

### First Embodiment

### On-vehicle recording apparatus

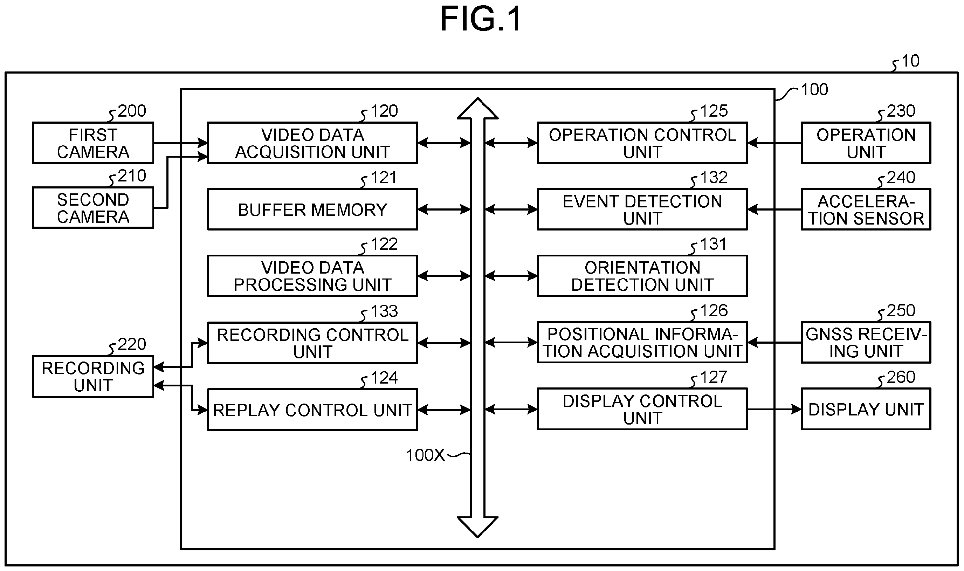

FIG. 1 is a block diagram illustrating a configuration example of an on-vehicle recording apparatus 10 including an on-vehicle recording control device (hereinafter, referred to as a "control device") 100 according to a first embodiment. The on-vehicle recording apparatus 10 is what is called a drive recorder that records an event that has occurred with respect to a vehicle. The on-vehicle recording apparatus 10 records an event if the event is detected when a driver and an occupant face the same direction other than a traveling direction of the vehicle.

The on-vehicle recording apparatus 10 may be an apparatus that is installed in a vehicle or may be a portable apparatus that is available in the vehicle. Furthermore, the on-vehicle recording apparatus 10 may include a function or a configuration of a device that is installed in advance in the vehicle, a navigation device, or the like. The on-vehicle recording apparatus 10 includes a first camera (first imaging unit) 200, a second camera (second imaging unit) 210, a recording unit 220, an operation unit 230, an acceleration sensor 240, a Global Navigation Satellite System (GNSS) receiving unit 250, a display unit 260, and the control device 100.

The first camera 200 includes a camera that captures an image of surroundings of the vehicle. Examples of the first camera 200 include a camera unique to the on-vehicle recording apparatus 10 and a camera for a bird's-eye view video for capturing an image of surroundings of the vehicle. In the present embodiment, the first camera 200 is arranged so as to face the front of the vehicle, and mainly captures an image of surroundings in front of the vehicle. The first camera 200 continuously captures videos since start of an engine until stop of the engine, that is, while the vehicle is operating. The first camera 200 outputs captured first video data to a video data acquisition unit 120 of the control device 100. The first video data is a moving image formed of images at 30 frames per second, for example.

The second camera 210 is a camera that captures an image of inside of the vehicle. The second camera 210 is arranged at a certain position at which at least a face of a driver of the vehicle can be captured. Alternatively, the second camera 210 is arranged at a certain position at which at least faces of occupants including the driver who are sitting on all of seats in the vehicle can be captured. The second camera 210 is arranged on an instrument panel, inside a rearview mirror of the vehicle, or in the vicinity of the rearview mirror, for example. An imaging range and an imaging direction of the second camera 210 are fixed or substantially fixed. The second camera 210 is configured with, for example, a visible light camera or a near infrared camera. The second camera 210 may be configured with, for example, a combination of a visible light camera and a near infrared camera. The second camera 210 continuously captures videos since start of the engine until stop of the engine, that is, while the vehicle is operating. The second camera 210 outputs captured second video data to the video data acquisition unit 120 of the control device 100. The second video data is a moving image formed of images at 30 frames per second, for example. Meanwhile, if the first video data and the second video data need not be distinguished from each other, each of the first video data and the second video data may be described as video data.

The first camera 200 and the second camera 210 may be a single camera that is able to capture a 360-degree image or a 180-degree image, for example. In this case, in the video data in which the 360-degree image or the 180-degree image is captured, the entire video data, a range in which the surroundings of the vehicle are captured, or a range in which the front of the vehicle is captured is adopted as the first video data. Further, in the video data in which the 360-degree image or the 180-degree image is captured, a range in which the faces of the occupants who are sitting on the seats of the vehicle can be captured is adopted as the second video data. Furthermore, the entire video data in which the 360-degree image or the 180-degree image is captured may be adopted as the first video data and the second video data.

The recording unit 220 is used to temporarily store data for the on-vehicle recording apparatus 10. The recording unit 220 is, for example, a semiconductor memory device, such as a random access memory (RAM) or a flash memory, or a recording unit, such as a memory. Alternatively, the recording unit 220 may be an external recording unit that is wirelessly connected via a communication device (not illustrated). The recording unit 220 records loop recording video data or event recording data on the basis of a control signal that is output from a recording control unit 133 of the control device 100.

The operation unit 230 is able to receive various kinds of operation on the on-vehicle recording apparatus 10. For example, the operation unit 230 is able to receive operation of manually storing captured video data as the event recording data in the recording unit 220. For example, the operation unit 230 is able to receive operation of replaying the loop recording video data or the event recording data that is recorded in the recording unit 220. For example, the operation unit 230 is able to receive operation of deleting the event recording data that is recorded in the recording unit 220. For example, the operation unit 230 is able to receive operation of terminating loop recording. The operation unit 230 outputs the operation information to an operation control unit 125 of the control device 100.

The acceleration sensor 240 is a sensor for detecting acceleration that occurs in the vehicle. The acceleration sensor 240 outputs a detection result to an event detection unit 132 of the control device 100. The acceleration sensor 240 is, for example, a sensor for detecting acceleration in 3-axis directions. The 3-axis directions are a front-back direction, a left-right direction, and a vertical direction of the vehicle.

The GNSS receiving unit 250 includes a GNSS for receiving a GNSS signal from a GNSS satellite, or the like. The GNSS receiving unit 250 outputs the received GNSS signal to a positional information acquisition unit 126 of the control device 100.

The display unit 260 is, as one example, a display device unique to the on-vehicle recording apparatus 10, a display device shared with a different system including a navigation system, or the like. The display unit 260 may be integrated with the first camera 200. The display unit 260 is a display including, for example, a liquid crystal display (LCD), an organic electroluminescence (EL) display, or the like. In the present embodiment, the display unit 260 is arranged on a dashboard, an instrument panel, a center console, or the like in front of the driver of the vehicle. The display unit 260 displays a video on the basis of a video signal that is output from a display control unit 127 of the control device 100. The display unit 260 displays a video that is being captured by the first camera 200 or a video that is recorded in the recording unit 220.

### On-vehicle recording control device

The control device 100 is, for example, an arithmetic processing device (control device) configured with a central processing unit (CPU) or the like. The control device 100 loads a stored program onto a memory and executes a command included in the program. The control device 100 includes an internal memory (not illustrated), and the internal memory is used to temporarily store data of the control device 100. The control device 100 includes, as functions implemented by the configuration and the program, the video data acquisition unit 120, a buffer memory 121, a video data processing unit 122, a replay control unit 124, the operation control unit 125, the positional information acquisition unit 126, the display control unit 127, an orientation detection unit 131, the event detection unit 132, and the recording control unit 133, all of which are connected to a bus 100X.

The video data acquisition unit 120 acquires the first video data in which an image of the surroundings of the vehicle is captured and the second video data in which an image of the inside of the vehicle is captured. More specifically, the video data acquisition unit 120 acquires the first video data that is captured by the first camera 200 and the second video data that is captured by the second camera 210. The video data acquisition unit 120 acquires the first video data and the second video data that are output by the first camera 200 and the second camera 210, and outputs the first video data and the second video data to the buffer memory 121. The first video data and the second video data that are acquired by the video data acquisition unit 120 are not limited to data including only videos, but may be captured video including videos and audio. Further, the video data acquisition unit 120 may acquire, as the first video data and the second video data, the video data in which the 360-degree image or the 180-degree image is captured.

The buffer memory 121 is an internal memory included in the control device 100, and is a memory for temporary storing video data that corresponds to a certain period of time and that is acquired by the video data acquisition unit 120, while updating the video data.

The video data processing unit 122 converts the video data that is temporarily stored in the buffer memory 121 into an arbitrary file format, such as the MP4 format, which is encoded by an arbitrary method, such as H.264 or Moving Picture Experts Group (MPEG)-4. The video data processing unit 122 generates video data as a file for a certain period of time from pieces of video data that are temporarily stored in the buffer memory 121. As a specific example, the video data processing unit 122 generates, as a file, video data of 60 seconds in order of recording from among pieces of video data that are temporarily stored in the buffer memory 121. The video data processing unit 122 outputs the generated video data to the recording control unit 133. Further, the video data processing unit 122 outputs the generated video data to the display control unit 127. A duration of the video data that is generated as a file is assumed as 60 seconds as one example, but embodiments are not limited to this example. The video data described herein may be data including audio in addition to videos that are captured by the first camera 200.

The replay control unit 124 performs control of replaying the loop recording video data or the event recording data that is recorded in the recording unit 220, on the basis of a replay operation control signal that is output from the operation control unit 125.

The operation control unit 125 receives operation information on operation that is received by the operation unit 230. For example, the operation control unit 125 acquires storage operation information indicating operation of manually soring video data, replay operation information indicating replay operation, or deletion operation information indicating operation of deleting video data, and outputs a control signal. For example, the operation control unit 125 acquires termination operation information indicating operation of terminating loop recording, and outputs a control signal.

The positional information acquisition unit 126 acquires positional information indicating a current location of the vehicle. The positional information acquisition unit 126 calculates the positional information on the current location of the vehicle by a well-known method based on the GNSS signal that is received by the GNSS receiving unit 250.

The display control unit 127 controls display of the video data on the display unit 260. The display control unit 127 outputs a video signal for causing the display unit 260 to output the video data. More specifically, the display control unit 127 outputs a video that is being captured by the first camera 200 or a video signal that is displayed by replaying the loop recording video data or the event recording data that is recorded in the recording unit 220.

The orientation detection unit 131 detects, from the second video data, orientations of faces or lines of sight of the driver of the vehicle and an occupant other than the driver, and determines whether a first condition that the driver and the occupant face the same direction other than the traveling direction of the vehicle is met.

More specifically, the orientation detection unit 131 recognizes persons from the second video data. As a method of recognizing persons from the second video data, a well-known method is available, and the method is not specifically limited. The persons to be detected are the driver of the vehicle and an occupant other than the driver.

Detection of the orientations of the faces or the lines of sight by the orientation detection unit 131 will be described below. The orientation detection unit 131 detects the orientations of the faces or the lines of sight of the driver of the vehicle and the occupant other than the driver. In the present embodiment, the orientation detection unit 131 performs image processing on the second video data, recognizes faces of the driver and the occupant other than the driver, and detects the orientations of the faces or the lines of sight. More specifically, the orientation detection unit 131 recognizes eyes of the driver and the occupant other than the driver from the second video data and acquires information indicating the orientations of the faces or the lines of sight, for example. To detect the lines of sight based on videos of the eyes of the driver and the occupant other than the driver, an arbitrary method, such as detection of the lines of sight based on positional relationships between inner corners of the eyes and irises detected from the videos of the eyes or detection of the lines of sight based on positional relationships between corneal reflexes and pupils, is applicable.

A method of detecting the driver and the occupant other than the driver from the second video data will be described below. A face of a person who is sitting on each of the seats is captured in a range that is defined by coordinates in the second video data. Accordingly, a person or a face that is recognized from the range that is defined by the coordinates in the second video data and that corresponds to each of the seats indicates an occupant in each of the seats. In this manner, it is possible to detect whether an occupant is present in each of the seats and the orientation of the face or the eyes of the occupant.

If the orientations of the faces or the lines of sight of the driver and the occupant other than the driver are out of a predetermined angular range with respect to a forward direction of the vehicle while the vehicle is traveling straight, the orientation detection unit 131 determines that the driver and the occupant face different directions from the forward direction of the vehicle, in other words, the driver and the occupant are looking aside. The predetermined angular range is a range in which a face or a line of sight of a normal driver is oriented while the vehicle is travelling straight, that is, other than when the vehicle turns right or left or the vehicle travels backward.

The orientation detection unit 131 may detect, from the second video data, the orientations of the faces or the lines of sight of the driver of the vehicle and a plurality of occupants other than the driver, and determine whether the first condition that the driver and a predetermined percentage of the occupants face the same direction other than the traveling direction of the vehicle is met.

It is assumed that the predetermined percentage is 50 percent, for example. In other words, if two occupants other than the driver are present, it is determined that the percentage is equal to or larger than the predetermined percentage if one of the occupants faces the same direction as the driver. Similarly, if three occupants other than the driver are present, it is determined that the percentage is equal to or larger than the predetermined percentage if two of the occupants face the same direction as the driver. If the predetermined percentage or more of the occupants are looking aside, the driver is likely to be affected. Therefore, if the orientations of the faces or the lines of sight of the driver and the predetermined percentage or more of the occupants are the same, the driver is likely to become careless about checking in the traveling direction of the vehicle.

The orientation detection unit 131 may detect, from the second video data, the orientations of the faces or the lines of sight of the driver of the vehicle and an occupant who is different from the driver and sitting on a front seat of the vehicle, and determine whether the first condition that the driver and the occupant face the same direction other than the traveling direction of the vehicle is met.

The occupant in the front seat has the same sight as the driver, and is able to view the same target object as the driver. Further, the occupant in the front seat can easily communicate with the driver, so that the driver is more likely to be affected by an action of looking aside by the occupant in the front seat. Therefore, if the orientations of the faces or the lines of sight of the driver and the occupant in the front seat are the same, the driver is more likely to become careless about checking in the traveling direction of the vehicle.

The event detection unit 132 detects an event associated with acceleration that is applied to the vehicle. More specifically, the event detection unit 132 detects an event on the basis of a detection result obtained by the acceleration sensor 240. If acceleration information is equal to or larger than a threshold that is set so as to correspond to a collision of the vehicle, the event detection unit 132 detects occurrence of the event.

The recording control unit 133 performs control of recording, in the recording unit 220, the video data that is generated as a file by the video data processing unit 122. During a period in which a loop recording process is performed, such as when an accessory power supply of the vehicle is turned on, the recording control unit 133 records the video data that is generated as a file by the video data processing unit 122 in the recording unit 220 as a rewritable video data. More specifically, the recording control unit 133 continuously records the video data generated by the video data processing unit 122 in the recording unit 220 while the loop recording process is being performed, and if the capacity of the recording unit 220 becomes full, the recording control unit 133 records new video data by overwriting the oldest video data.

If the event detection unit 132 detects occurrence of an event, the recording control unit 133 stores video data corresponding to the detection of the event. The video data corresponding to the detection of the event is video data of a predetermined period among pieces of video data generated by the video data processing unit 122. The recording control unit 133 stores the video data corresponding to the detection of the event in the recording unit 220 as event recording data for which overwrite is prohibited. In this case, the event recording data that is recorded in the recording unit 220 by the recording control unit 133 is stored by copying video data of a predetermined period, such as about 10 seconds before and after a time point at which the event is detected, from the buffer memory 121 and storing the copied video data as the event recording data, for example. If the event is detected, the recording control unit 133 stores the first video data including at least an event detection time point as the event recording data.

Furthermore, if the orientation detection unit 131 determines that the first condition is met, the recording control unit 133 adds an event recording start flag to the first video data, and if an event is detected while the first condition is met, the recording control unit 133 stores, as the event recording data, the first video data from the event recording start flag to at least the event detection time point. In this case, the event recording data that is recorded in the recording unit 220 by the recording control unit 133 is stored as the event recording data by copying, from the buffer memory 121, video data from the event recording start flag to at least the event detection time point, and storing the copied video data as the event recording data, for example.

The recording control unit 133 may store, as the event recording data, the first video data and the second video data from the event recording start flag to at least the event detection time point.

### Process performed by on-vehicle recording control device

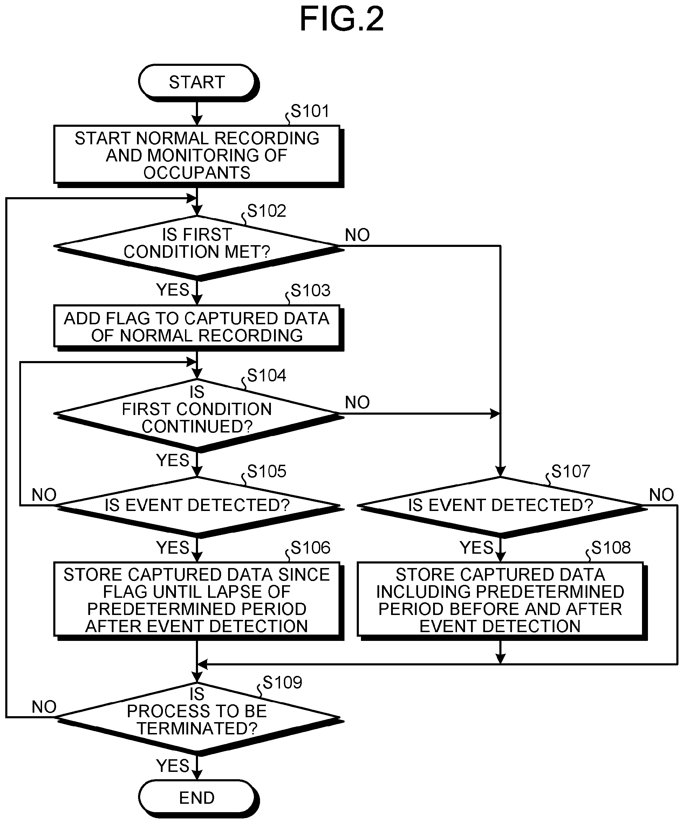

The flow of a process performed by the control device 100 will be described below with reference to FIG. 2. FIG. 2 is a flowchart illustrating an example of the flow of the process performed by the control device 100 according to the first embodiment.

The control device 100 starts normal recording and monitoring of occupants (Step S101). More specifically, the control device 100 causes the recording control unit 133 to transmit video data captured by the first camera 200 and the second camera 210 to the buffer memory 121, generate a video file of videos of a predetermined period, such as 60 seconds, and record the video file in the recording unit 220, for example. The control device 100 goes to Step S102.

The control device 100 determines whether the first condition is met (Step S102). More specifically, the control device 100 causes the orientation detection unit 131 to detect the orientations of the faces or the lines of sight of the driver of the vehicle and an occupant other than the driver from the second video data, and determine whether the first condition that the driver and the occupant face the same direction other than the traveling direction of the vehicle is met. If the orientation detection unit 131 determines that the first condition is met (YES at Step S102), the control device 100 goes to Step S103. If the orientation detection unit 131 does not determine that the first condition is met (NO at Step S102), the control device 100 goes to Step S107.

If it is determined that the first condition is met (YES at Step S102), the control device 100 causes the recording control unit 133 to add the event recording start flag to video data of normal recording corresponding to the period in which the first condition is met, in other words, a period in which the driver and the occupant other than the driver are looking aside, and store the video data (Step S103). More specifically, the control device 100 causes the recording control unit 133 to add the event recording start flag to the first video data corresponding to the period in which the first condition is met. The control device 100 causes the recording control unit 133 to store the first video data to which the event recording start flag is added as video data of normal recording in the recording unit 220. The control device 100 goes to Step S104.

The control device 100 determines whether the state in which the first condition is met is being continued (Step S104). More specifically, the control device 100 causes the orientation detection unit 131 to determine whether the state in which the first condition is met is continuously detected. If the orientation detection unit 131 determines that the state in which the first condition is met is being continued (YES at Step S104), the control device 100 goes to Step S105. If the orientation detection unit 131 does not determine that the state in which the first condition is met is being continued (NO at Step S104), the control device 100 goes to Step S107. For example, if the driver or the occupant faces the traveling direction of the vehicle or changes a viewing direction, the orientation detection unit 131 does not determine that the state in which the first condition is met is continued (NO at Step S104), and the process goes to Step S107.

If it is determined that the state in which the first condition is met is being continued (YES at Step S104), the control device 100 causes the event detection unit 132 to determine whether an event is detected on the basis of a detection result (Step S105). If the detected acceleration is equal to or larger than a threshold, the event detection unit 132 determines that the event is detected (YES at Step S105), and the process goes to Step S106. Alternatively, if the detected acceleration is not equal to or larger than the threshold, the event detection unit 132 determines that an event is not detected (NO at Step S105), and the process at Step S104 is performed again.

If it is determined that the event is detected (YES at Step S105), the control device 100 causes the recording control unit 133 to store video data since the event recording start flag until a lapse of a predetermined period after event detection (Step S106). More specifically, the control device 100 causes the recording control unit 133 to store the first video data, to which the event recording start flag is added, as the event recording data in the recording unit 220 in an overwrite-prohibited manner. In this case, it may be possible to store the second video data as the event recording data in addition to the first video data. For example, the second video data from the event start flag to at least the event detection time point is stored, as the event recording data, in addition to the first video data. The event recording data is the first video data from the event recording start flag and including a predetermined period after the event detection time point. The control device 100 goes to Step S109.

If it is not determined that the first condition is met (NO at Step S102), or if it is not determined that the state in which the first condition is met is being continued (NO at Step S104), the control device 100 causes the event detection unit 132 to determine whether an event is detected on the basis of a detection result (Step S107). If the detected acceleration is equal to or larger than a threshold, the event detection unit 132 determines that the event is detected (YES at Step S107), and the process goes to Step S108. Alternatively, if the detected acceleration is not equal to or larger than the threshold, the event detection unit 132 determines that an event is not detected (NO at Step S107), and the process goes to Step S109.

If it is determined that the event is detected (YES at Step S107), the control device 100 causes the recording control unit 133 to store video data including a predetermined period before and after the event detection time point (Step S108). More specifically, the control device 100 causes the recording control unit 133 to store the first video data as the event recording data in the recording unit 220 in an overwrite-prohibited manner. The event recording data is the first video data including the predetermined period before and after the event detection time point. The control device 100 goes to Step S109.

The control device 100 determines whether to terminate the loop recording and the event detection (Step S109). For example, it is determined that the loop recording and the event detection are to be terminated if a power supply or power of the vehicle is turned off or if the operation unit 230 is operated. If the control device 100 determines that the loop recording and the event detection are to be terminated (YES at Step S109), the process is terminated. If the control device 100 does not determine that the loop recording and the event detection are to be terminated (NO at Step S109), the process at Step S102 is performed again.

### Effects

As described above, in the present embodiment, if an event is detected while the driver and an occupant other than the driver face the same direction other than the traveling direction, the first video data from the event recording start flag to at least the event detection time point is stored as the event recording data. According to the present embodiment, it is possible to store the event recording data including a period prior to the event detection time point. In this manner, according to the present embodiment, it is possible to appropriately record an event, such as an accident, which is caused by inattention of the driver of the vehicle, in addition to a cause of the event.

In the present embodiment, if the number of occupants who face the same direction as the driver is equal to or larger than a predetermined percentage, it is possible to determine that the first condition is met. As described above, if the number of occupants who face the same direction as the driver is equal to or larger than the predetermined percentage, the driver is likely to be affected. According to the present embodiment, if the driver and the predetermined percentage or more of the occupants face the same direction and attention in the traveling direction is likely to be reduced, it is possible to determine that the first condition is met.

In the present embodiment, it is possible to determine whether the first condition is met on the basis of the orientations of the faces or the lines of sight of the driver and the occupant who is different from the driver and sitting on a front seat of the vehicle. As described above, the driver is likely to be affected by the occupant in the front seat. Therefore, if the orientations of the faces or the lines of sight of the driver and the occupant in the front seat are the same, the driver is more likely to become careless about checking in the traveling direction of the vehicle. According to the present embodiment, it is possible to determine that the first condition is met if the attention in the traveling direction is more likely to be reduced.

According to the present embodiment, it is possible to store, as the event recording data, the first video data and the second video data from the event recording start flag to at least the event detection time point. According to the present embodiment, it is possible to store, as the event recording data, a situation around the vehicle and inside the vehicle. According to the present embodiment, it is possible to appropriately record an event, such as an accident, which is caused by inattention of the driver of the vehicle, in addition to a cause of the event.

### Second Embodiment

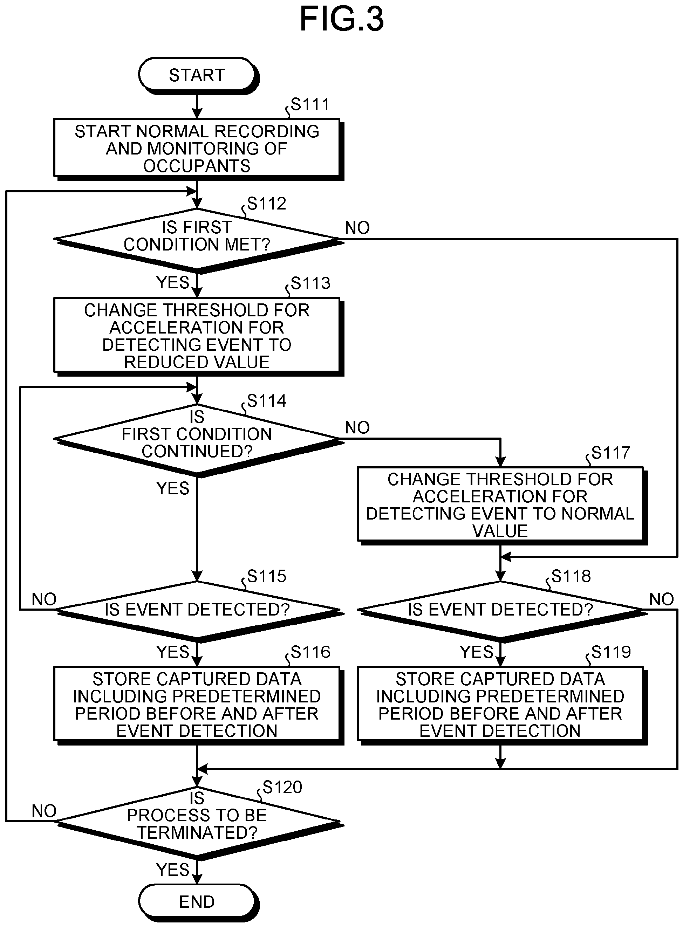

The on-vehicle recording apparatus 10 according to a second embodiment will be described below with reference to FIG. 3. FIG. 3 is a flowchart illustrating an example of the flow of a process performed by the control device 100 according to the second embodiment. A basic configuration of the on-vehicle recording apparatus 10 is the same as the on-vehicle recording apparatus 10 of the first embodiment. In the following description, the same components as those of the on-vehicle recording apparatus 10 are denoted by the same reference symbols or corresponding symbols, and detailed explanation thereof will be omitted. If an event is detected while the driver and the occupant face the same direction other than the traveling direction of the vehicle, the on-vehicle recording apparatus 10 changes the threshold for detecting an event.

The event detection unit 132 detects an event associated with acceleration that is applied to the vehicle, and if the orientation detection unit 131 determines that the first condition is met, the event detection unit 132 reduces the threshold for the acceleration for detecting an event and then detects an event. Specifically, it is assumed that a normal threshold, that is, a threshold that is not reduced is set to 1.5G, and a reduced threshold is set to 0.6G. With this configuration, an event is easily detected when the orientation detection unit 131 determines that the first condition is met.

If the event detection unit 132 detects an event, the recording control unit 133 stores the first video data including at least the event detection time point as the event recording data.

The flow of a process performed by the control device 100 will be described below with reference to FIG. 3. At Step Sill, Step S112, Step S114, Step S115, and Step S118 to Step 120, the same processes as the processes performed at Step S101, Step S102, Step S104, Step S105, and Step S107 to Step S109 in the flowchart illustrated in FIG. 2 are performed.

If it is determined that the first condition is met (YES at Step S112), the control device 100 changes the threshold for the acceleration by which the event detection unit 132 detects an event to a reduced value (Step S113). The control device 100 goes to Step S114.

If it is determined that the event is detected (YES at Step S115), the control device 100 causes the recording control unit 133 to store video data including a predetermined period before and after the event detection time point (Step S116). More specifically, the control device 100 causes the recording control unit 133 to store the first video data as the event recording data in the recording unit 220 in an overwrite-prohibited manner. The event recording data is the first video data including the predetermined period before and after the event detection time point. The control device 100 goes to Step S120.

If it is not determined that the state in which the first condition is met is being continued (NO at Step S114), the control device 100 changes the threshold for the acceleration by which the event detection unit 132 detects an event to a normal value (Step S117). The control device 100 goes to Step S118.

As described above, in the present embodiment, if the orientation detection unit 131 determines that the first condition is met, the threshold for the acceleration for detecting an event is reduced and then an event is detected. In the present embodiment, it is possible to set the threshold for the acceleration for detecting an event in a situation in which the driver and the occupant other than the driver are looking aside and a minor collision and minor contact, which are not detected as collisions, are likely to occur. In this manner, according to the present embodiment, it is possible to appropriately record an event, such as an accident, which is caused by inattention of the driver of the vehicle, in addition to a cause of the event.

### Third Embodiment

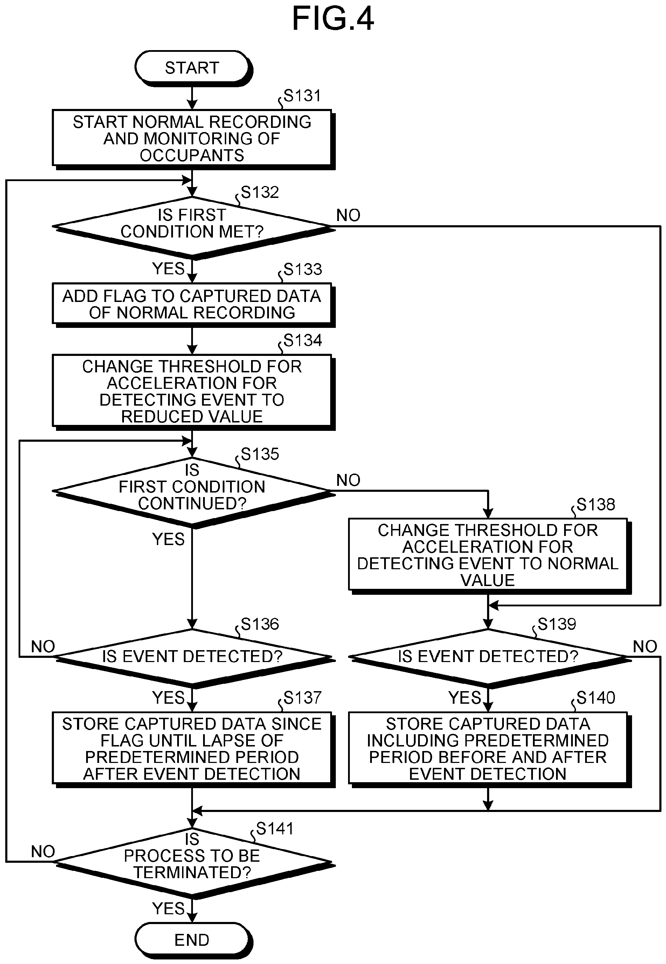

The on-vehicle recording apparatus 10 according to a third embodiment will be described below with reference to FIG. 4. FIG. 4 is a flowchart illustrating an example of the flow of a process performed by the control device 100 according to the third embodiment. A basic configuration of the on-vehicle recording apparatus 10 is the same as the on-vehicle recording apparatuses 10 of the first embodiment and the second embodiment. If an event is detected while the driver and the occupant face the same direction other than the traveling direction of the vehicle, the on-vehicle recording apparatus 10 changes the threshold for detecting an event. If an event is detected in the state in which the first condition is met, the on-vehicle recording apparatus 10 stores, as the event recording data, the first video data from the event recording start flag to at least the event detection time point.

The event detection unit 132 has the same function as the second embodiment. More specifically, the event detection unit 132 detects an event associated with acceleration that is applied to the vehicle, and if the orientation detection unit 131 determines that the first condition is met, the event detection unit 132 reduces the threshold for the acceleration for detecting an event and then detects an event.

The recording control unit 133 has the same function as the first embodiment. More specifically, if the orientation detection unit 131 determines that the first condition is met, the recording control unit 133 adds the event recording start flag to the first video data, and if an event is detected while the first condition is met, the recording control unit 133 stores, as the event recording data, the first video data from the event recording start flag to at least the event detection time point.

The flow of a process performed by the control device 100 will be described below with reference to FIG. 4. At Step S131 to Step S133, Step S135 to Step S137, and Step S139 to Step S141, the same processes as the processes performed at Step S101 to Step S103, Step S104 to Step S106, and Step S107 to Step S109 in the flowchart illustrated in FIG. 2 are performed. At Step S134 and Step S138, the same processes as the processes performed at Step S113 and Step S117 in the flowchart illustrated in FIG. 3 are performed.

As described above, in the present embodiment, if it is determined that the first condition is met, the threshold for the acceleration for detecting an event is reduced and then an event is detected. In the present embodiment, if an event is detected in the state in which the first condition is met, the first video data from the event recording start flag to at least the event detection time point is stored as the event recording data. In the present embodiment, it is possible to set the threshold for the acceleration for detecting an event in a situation in which the driver and the occupant other than the driver are looking aside and a minor collision and minor contact are likely to occur. In the present embodiment, it is possible to store the event recording data including a period prior to the event detection time point. In this manner, according to the present embodiment, it is possible to appropriately record an event, such as an accident, which is caused by inattention of the driver of the vehicle, in addition to a cause of the event.

### Fourth Embodiment

A basic configuration of the on-vehicle recording apparatus 10 is the same as the on-vehicle recording apparatuses 10 of the first embodiment and the second embodiment. A fourth embodiment is different from the first to the third embodiments in that determination is performed by adopting, as the first condition, a condition that the driver faces a direction other than the traveling direction of the vehicle for a predetermined time or more.

If an event is detected while the driver faces a direction other than the traveling direction of the vehicle, the on-vehicle recording apparatus 10 records an event.

If the orientation detection unit 131 determines that the first condition is met, the on-vehicle recording apparatus 10 performs a process by combining the processes of the second embodiment and the third embodiment. More specifically, the on-vehicle recording apparatus 10 performs a process a), a process b), or a combination of the processes a) and b) if the orientation detection unit 131 determines that the first condition is met.
a) The recording control unit 133 adds the event recording start flag to the first video data, and if an event is detected while the first condition is met, the recording control unit 133 stores, as the event recording data, the first video data from the event recording start flag to at least the event detection time point. The process a) corresponds to the process of the third embodiment.
b) The event detection unit 132 reduces the threshold for the acceleration for detecting an event and then detects an event. The process b) corresponds to the process of the second embodiment.

The orientation detection unit 131 detects, from the second video data, the orientation of the face or the line of sight of the driver of the vehicle, and determines whether the first condition that the driver faces the same direction other than the traveling direction of the vehicle is met. More specifically, the orientation detection unit 131 determines, as the first condition, that the driver faces a direction other than the traveling direction of the vehicle for a predetermined time or more.

In the present embodiment, the control device 100 performs the processes in accordance with the flowcharts illustrated in FIG. 2 to FIG. 4. At Step S101 in FIG. 2, the control device 100 starts normal recording and monitoring of a driver. At Step S102, the control device 100 causes the orientation detection unit 131 to detect, from the second video data, the orientation of the face or the line of sight of the driver of the vehicle, and determines whether the first condition that the driver faces a direction other than the traveling direction of the vehicle is met.

As described above, in the present embodiment, if an event is detected while the driver faces a direction other than the traveling direction, it is possible to store, as the event recording data, the first video data from the event recording start flag to at least the event detection time point.

In the present embodiment, if the orientation detection unit 131 determines that the first condition is met, the threshold for the acceleration for detecting an event is reduced and then an event is detected. In the present embodiment, it is possible to set the threshold for the acceleration for detecting an event in a situation in which the driver is looking aside and a minor collision and minor contact, which are not detected as collisions, are likely to occur.

If only the driver faces a direction other than the traveling direction, even if the driver checks surroundings while looking aside, the driver may become careless about visual checking in the traveling direction. According to the present embodiment as described above, in a state in which only the driver faces a direction other than the traveling direction, it is possible to check a behavior of the driver when an event, such as a collision, occurs.

The on-vehicle recording apparatus 10 according to the present disclosure may be embodied in various kinds of different forms other than the embodiments as described above.

The components of the on-vehicle recording apparatus 10 illustrated in the drawing are functionally conceptual and do not necessarily have to be physically configured in the manner illustrated in the drawings. In other words, specific forms of distribution and integration of the apparatuses are not limited to those illustrated in the drawings, and all or part of the apparatuses may be functionally or physically distributed or integrated in arbitrary units depending on various loads or use conditions.

The components of the on-vehicle recording apparatus 10 are realized as software by, for example, a program or the like loaded on a memory. In the embodiments as described above, it is explained that the functional blocks are implemented by cooperation with hardware or software. In other words, the functional blocks may be realized in various forms using only hardware, using only software, or using a combination of hardware and software.

The components described above include one that can be easily thought of by a person skilled in the art and one that is practically identical. Further, the components described above may be combined appropriately. Furthermore, within the scope not departing from the gist of the embodiments described above, various omission, replacement, and modifications of the components may be made.

The on-vehicle recording control device, the recording control method, and the program according to the present disclosure may be used for a drive recorder, for example.

### Reference Signs List

- 10: on-vehicle recording apparatus

- 100: control device (on-vehicle recording control device)
- 100X: bus
- 120: video data acquisition unit
- 121: buffer memory
- 122: video data processing unit
- 124: replay control unit
- 125: operation control unit
- 126: positional information acquisition unit
- 127: display control unit
- 131: orientation detection unit
- 132: event detection unit
- 133: recording control unit
- 200: first camera (first imaging unit)
- 210: second camera (second imaging unit)
- 220: recording unit
- 230: operation unit
- 240: acceleration sensor
- 250: GNSS receiving unit
- 260: display unit

## Claims

1. An on-vehicle recording control apparatus (10) comprising:
a video data acquisition unit (120) configure to acquire first video data and second video data, the first video data being captured by a first imaging unit (200) configured to capture an image of surroundings of a vehicle, the second video data being captured by a second imaging unit (210) configured to capture an image of inside of the vehicle;
an orientation detection unit (131) configured to detect, from the second video data, an orientation of one of a face and a line of sight of a driver of the vehicle, and configured to determine whether a first condition that the driver faces a direction other than a traveling direction of the vehicle is met;
an event detection unit (132) configured to detect occurrence of an event when acceleration information obtained by an acceleration sensor, which is configured to detect acceleration that is applied to the vehicle, is equal to or larger than a threshold; and
a recording control unit (133) that, if an event is detected, stores first video data including at least an event detection time point as event recording data, wherein the on-vehicle recording control apparatus is configured such that a if the orientation detection unit (131) determines that the first condition is met, the on-vehicle recording control apparatus performs one of a process a), a process b), and a combination of the process a) and the process b), where
a) the recording control unit (132) adds an event recording start flag to the first video data, and if an event is detected while the first condition is met, the recording control unit (132) stores, as the event recording data, the first video data from the event recording start flag to at least the event detection time point, and
b) the event detection unit (132) changes the threshold for the acceleration information to a reduced threshold and then detects an event.

2. The on-vehicle recording control apparatus (10) according to claim 1, wherein the orientation detection unit (131) is configured to determine, as the first condition, that the driver faces a direction other than the traveling direction of the vehicle for a predetermined time or more.

3. The on-vehicle recording control apparatus (10) according to claim 1, wherein the orientation detection unit (131) is configured to detect, from the second video data, an orientation of one of a face and a line of sight of an occupant other than the driver in addition to the orientation of one of the face and the line of sight of the driver of the vehicle, and determine, as the first condition, that the driver and the occupant face a same direction other than the traveling direction of the vehicle.

4. The on-vehicle recording control apparatus (10) according to claim 3, wherein the orientation detection unit (131) is configured to detect, from the second video data, orientations of faces or lines of sight of the driver of the vehicle and a plurality of occupants other than the driver, and determine whether a first condition that the driver and a predetermined percentage of the occupants face a same direction other than the traveling direction of the vehicle is met.

5. The on-vehicle recording control apparatus (10) according to claim 3, wherein the orientation detection unit (131) is configured to detect, from the second video data, orientations of faces or lines of sight of the driver of the vehicle and an occupant who is different from the driver and sitting on a front seat of the vehicle, and determine whether a first condition that the driver and the occupant face a same direction other than the traveling direction of the vehicle is met.

6. A recording control method implemented by an on-vehicle recording control apparatus (10), the recording control method comprising:
a video data acquisition step of acquiring first video data and second video data, the first video data being captured by a first imaging unit (200) configured to capture an image of surroundings of a vehicle, the second video data being captured by a second imaging unit (210) configured to capture an image of inside of the vehicle;
an orientation detection step of detecting, from the second video data, an orientation of one of a face and a line of sight of a driver of the vehicle, and determining whether a first condition that the driver faces a direction other than a traveling direction of the vehicle is met;
an event detection step of detecting occurrence of an event when acceleration information obtained by an acceleration sensor, which is configured to detect acceleration that is applied to the vehicle, is equal to or larger than a threshold; and
a recording control step of storing, if an event is detected, first video data including at least an event detection time point as event recording data, wherein
if it is determined, at the orientation detection step, that the first condition is met, one of a process a), a process b), and a combination of the process a) and the process b) is performed, where
a) the recording control step includes adding an event recording start flag to the first video data, and if an event is detected while the first condition is met, the recording control step includes storing, as the event recording data, the first video data from the event recording start flag to at least the event detection time point, and
b) the event detection step includes changing the threshold for the acceleration information to a reduced threshold and then detecting an event.

## Patentansprüche

1. Am Fahrzeug befindliche Aufzeichnungssteuervorrichtung (10), die Folgendes aufweist:
eine Videodatenerfassungseinheit (120), die konfiguriert ist, um erste Videodaten und zweite Videodaten zu erfassen, wobei die ersten Videodaten von einer ersten Bilderfassungseinheit (200) erfasst werden,
die konfiguriert ist, um ein Bild der Umgebung eines Fahrzeugs aufzunehmen, wobei die zweiten Videodaten von einer zweiten Bilderfassungseinheit (210) aufgenommen werden, die konfiguriert ist, um ein Bild des Fahrzeuginneren aufzunehmen;
eine Orientierungsdetektionseinheit (131), die konfiguriert ist, um aus den zweiten Videodaten eine Orientierung eines Gesichts oder einer Blick- bzw. Sichtlinie eines Fahrers des Fahrzeugs zu detektieren, und konfiguriert ist, um zu bestimmen, ob eine erste Bedingung erfüllt ist, dass der Fahrer in eine andere Richtung als die Fahrtrichtung des Fahrzeugs blickt;
eine Ereignisdetektionseinheit 132), die konfiguriert ist, um das Auftreten eines Ereignisses zu detektieren, wenn Beschleunigungsinformation, die durch einen Beschleunigungssensor erhalten wurde, der konfiguriert ist, um eine auf das Fahrzeug ausgeübte Beschleunigung zu detektieren, gleich einem oder größer als ein Schwellenwert ist; und
eine Aufzeichnungssteuereinheit (133), die, wenn ein Ereignis detektiert wird, erste Videodaten, die mindestens einen Ereignisdetektionszeitpunkt enthalten, als Ereignisaufzeichnungsdaten speichert, wobei die am Fahrzeug befindliche Aufzeichnungssteuervorrichtung so konfiguriert ist, dass
wenn die Orientierungsdetektionseinheit (131) bestimmt, dass die erste Bedingung erfüllt ist, die am Fahrzeug befindliche Aufzeichnungssteuervorrichtung einen der folgenden Prozesse ausführt: einen Prozess a),
einen Prozess b) oder eine Kombination aus dem Prozess a) und dem Prozess b), wobei
a) die Aufzeichnungssteuereinheit (132) ein Ereignisaufzeichnungsstart-Flag zu den ersten Videodaten hinzufügt, und wobei, wenn ein Ereignis detektiert wird, während die erste Bedingung erfüllt ist, die Aufzeichnungssteuereinheit (132) die ersten Videodaten vom Ereignisaufzeichnungsstart-Flag bis mindestens zum Ereignisdetektionszeitpunkt als Ereignisaufzeichnungsdaten speichert, und
b) die Ereignisdetektionseinheit (132) den Schwellenwert für die Beschleunigungsinformation auf einen reduzierten Schwellenwert ändert und dann ein Ereignis detektiert.

2. Am Fahrzeug befindliche Aufzeichnungssteuervorrichtung (10) nach Anspruch 1, wobei die Orientierungsdetektionseinheit (131) konfiguriert ist, um als die erste Bedingung festzustellen, dass der Fahrer für eine vorbestimmte Zeit oder länger in eine andere Richtung als die Fahrtrichtung des Fahrzeugs blickt.

3. Am Fahrzeug befindliche Aufzeichnungssteuervorrichtung (10) nach Anspruch 1, wobei die Orientierungsdetektionseinheit (131) konfiguriert ist, um aus den zweiten Videodaten eine Orientierung des Gesichts oder der Blick- bzw. Sichtlinie eines Insassen außer dem Fahrer zu detektieren, und zwar zusätzlich zur Orientierung des Gesichts oder der Blicklinie des Fahrers des Fahrzeugs, und als die erste Bedingung zu bestimmen, dass der Fahrer und der Insasse in eine gleiche Richtung blicken, die nicht die Fahrtrichtung des Fahrzeugs ist.

4. Am Fahrzeug befindliche Aufzeichnungssteuervorrichtung (10) nach Anspruch 3, wobei die Orientierungsdetektionseinheit (131) konfiguriert ist, um aus den zweiten Videodaten Orientierungen von Gesichtern oder Blick- bzw. Sichtlinien des Fahrers des Fahrzeugs und einer Vielzahl von Insassen außer dem Fahrer zu detektieren und zu bestimmen, ob eine erste Bedingung erfüllt ist, dass der Fahrer und ein vorbestimmter Prozentsatz der Insassen in eine gleiche Richtung blicken, die nicht die Fahrtrichtung des Fahrzeugs ist.

5. Am Fahrzeug befindliche Aufzeichnungssteuervorrichtung (10) nach Anspruch 3, wobei die Orientierungsdetektionseinheit (131) konfiguriert ist, um aus den zweiten Videodaten Orientierungen von Gesichtern oder Blick- bzw. Sichtlinien des Fahrers des Fahrzeugs und eines Insassen, der nicht der Fahrer ist, und auf einem Vordersitz des Fahrzeugs sitzt, zu detektieren und zu bestimmen, ob eine erste Bedingung erfüllt ist, dass der Fahrer und der Insasse in die gleiche Richtung blicken, die nicht die Fahrtrichtung des Fahrzeugs ist.

6. Aufzeichnungssteuerverfahren, das durch eine am Fahrzeug befindliche Aufzeichnungssteuervorrichtung (10) implementiert ist, wobei das Aufzeichnungssteuerverfahren Folgendes aufweist:
einen Videodatenerfassungsschritt des Erfassens von ersten Videodaten und zweiten Videodaten, wobei die ersten Videodaten von einer ersten Bilderfassungseinheit (200) aufgenommen werden, die konfiguriert ist, um ein Bild der Umgebung eines Fahrzeugs aufzunehmen, wobei die zweiten Videodaten von einer zweiten Bilderfassungseinheit (210) aufgenommen werden, die konfiguriert ist, um ein Bild des Fahrzeuginneren aufzunehmen;
einen Orientierungsdetektionsschritt des Detektierens einer Orientierung eines Gesichts oder einer Blick- bzw. Sichtlinie eines Fahrers des Fahrzeugs aus den zweiten Videodaten und des Bestimmens, ob eine erste Bedingung erfüllt ist, dass der Fahrer in eine andere Richtung als die Fahrtrichtung des Fahrzeugs blickt;
einen Ereignisdetektionsschritt des Erkennens des Auftretens eines Ereignisses, wenn Beschleunigungsinformation, die durch einen Beschleunigungssensor erhalten wurde, der konfiguriert ist, um eine auf das Fahrzeug ausgeübte Beschleunigung zu detektieren, gleich einem oder größer als ein Schwellenwert ist; und
einen Aufzeichnungssteuerschritt des Speicherns, wenn ein Ereignis detektiert wird, von ersten Videodaten, die mindestens einen Ereignisdetektionszeitpunkt enthalten, als Ereignisaufzeichnungsdaten, wobei
wenn im Orientierungsdetektionsschritt festgestellt wird, dass die erste Bedingung erfüllt ist, einer der folgenden Prozesse ausgeführt wird: ein Prozess a), ein Prozess b) oder eine Kombination aus dem Prozess a) und dem Prozess b), wobei
a) der Aufzeichnungssteuerschritt das Hinzufügen eines Ereignisaufzeichnungsstart-Flags zu den ersten Videodaten aufweist, und wobei, wenn ein Ereignis detektiert wird, während die erste Bedingung erfüllt ist, der Aufzeichnungssteuerschritt das Speichern der ersten Videodaten vom Ereignisaufzeichnungsstart-Flag bis mindestens zum Ereignisdetektionszeitpunkt als die Ereignisaufzeichnungsdaten aufweist, und
b) der Ereignisdetektionsschritt das Ändern des Schwellenwerts für die Beschleunigungsinformation auf einen reduzierten Schwellenwert aufweist, und dann das Detektieren eines Ereignisses .

## Revendications

1. Appareil de commande d'enregistrement embarqué (10) comprenant :
une unité d'acquisition de données vidéo (120) configurée pour acquérir des premières données vidéo et des deuxièmes données vidéo, les premières données vidéo étant capturées par une première unité d'imagerie (200) configurée pour capturer une image de l'environnement d'un véhicule, les deuxièmes données vidéo étant capturées par une deuxième unité d'imagerie (210) configurée pour capturer une image de l'intérieur du véhicule ;
une unité de détection d'orientation (131) configurée pour détecter, à partir des deuxièmes données vidéo, une orientation d'un parmi un visage et une ligne de visée d'un conducteur du véhicule, et configurée pour déterminer si une première condition selon laquelle le conducteur fait face à une direction autre qu'une direction de déplacement du véhicule est remplie ;
une unité de détection d'événement (132) configurée pour détecter l'apparition d'un événement lorsque des informations d'accélération obtenues par un capteur d'accélération, qui est configuré pour détecter l'accélération appliquée au véhicule, sont égales ou supérieures à un seuil ; et
une unité de commande d'enregistrement (133) qui, si un événement est détecté, stocke des premières données vidéo comportant au moins un point temporel de détection d'événement en tant que données d'enregistrement d'événement, dans lequel
l'appareil de commande d'enregistrement embarqué est configuré de sorte que,
si l'unité de détection d'orientation (131) détermine que la première condition est remplie, l'appareil de commande d'enregistrement embarqué met en oeuvre un parmi un processus a), un processus b) et une combinaison du processus a) et du processus b), où
a) l'unité de commande d'enregistrement (132) ajoute un indicateur de début d'enregistrement d'événement aux premières données vidéo, et, si un événement est détecté alors que la première condition est remplie, l'unité de commande d'enregistrement (132) stocke, en tant que données d'enregistrement d'événement, les premières données vidéo à partir de l'indicateur de début d'enregistrement d'événement jusqu'au moins le moment de détection d'événement, et
b) l'unité de détection d'événement (132) modifie le seuil d'accélération pour les informations d'accélération en un seuil réduit, puis détecte un événement.

2. Appareil de commande d'enregistrement embarqué (10) selon la revendication 1, dans lequel l'unité de détection d'orientation (131) est configurée pour déterminer, comme première condition, que le conducteur fait face à une direction autre que la direction de déplacement du véhicule pendant un temps prédéterminé ou plus.

3. Appareil de commande d'enregistrement embarqué (10) selon la revendication 1, dans lequel l'unité de détection d'orientation (131) est configurée pour détecter, à partir des deuxièmes données vidéo, une orientation d'un parmi un visage et une ligne de visée d'un occupant autre que le conducteur en plus de l'orientation d'un parmi le visage et la ligne de visée du conducteur du véhicule, et déterminer, comme étant la première condition, que le conducteur et l'occupant font face à une même direction autre que la direction de déplacement du véhicule.

4. Appareil de commande d'enregistrement embarqué (10) selon la revendication 3, dans lequel l'unité de détection d'orientation (131) est configurée pour détecter, à partir des deuxièmes données vidéo, les orientations des visages ou des lignes de visée du conducteur du véhicule et d'une pluralité d'occupants autres que le conducteur, et déterminer si une première condition selon laquelle le conducteur et un pourcentage prédéterminé des occupants font face à une même direction autre que la direction de déplacement du véhicule est remplie.

5. Appareil de commande d'enregistrement embarqué (10) selon la revendication 3, dans lequel l'unité de détection d'orientation (131) est configurée pour détecter, à partir des deuxièmes données vidéo, les orientations des visages ou des lignes de visée du conducteur du véhicule et d'un occupant qui est différent du conducteur et assis sur un siège avant du véhicule, et déterminer si une première condition selon laquelle le conducteur et l'occupant font face à une même direction autre que la direction de déplacement du véhicule est remplie.

6. Procédé de commande d'enregistrement mis en oeuvre par un appareil de commande d'enregistrement embarqué (10), le procédé de commande d'enregistrement comprenant :
une étape d'acquisition de données vidéo d'acquisition de premières données vidéo et de deuxièmes données vidéo, les premières données vidéo étant capturées par une première unité d'imagerie (200) configurée pour capturer une image de l'environnement d'un véhicule, les deuxièmes données vidéo étant capturées par une deuxième unité d'imagerie (210) configurée pour capturer une image de l'intérieur du véhicule ;
une étape de détection d'orientation de détection, à partir des deuxièmes données vidéo, d'une orientation d'un parmi un visage et une ligne de visée d'un conducteur du véhicule, et de détermination de si une première condition selon laquelle le conducteur fait face à une direction autre qu'une direction de déplacement du véhicule est remplie ;
une étape de détection d'un événement de détection de l'apparition d'un événement lorsque des informations d'accélération obtenues par un capteur d'accélération, qui est configuré pour détecter l'accélération appliquée au véhicule, sont égales ou supérieures à un seuil ; et
une étape de commande d'enregistrement de stockage, si un événement est détecté, des premières données vidéo comportant au moins un moment de détection d'événement en tant que données d'enregistrement d'événement, dans lequel,
s'il est déterminé, à l'étape de détection d'orientation, que la première condition est remplie, l'un parmi un processus a), un processus b) et une combinaison du processus a) et du processus b) est mis en oeuvre, où
a) l'étape de commande d'enregistrement comporte l'ajout d'un indicateur de début d'enregistrement d'événement aux premières données vidéo, et si un événement est détecté alors que la première condition est remplie, l'étape de commande d'enregistrement comporte le stockage, en tant que données d'enregistrement d'événement, des premières données vidéo à partir de l'indicateur de début d'enregistrement d'événement jusqu'au moins le moment de détection d'événement, et
b) l'étape de détection d'événement comporte la modification du seuil d'accélération pour les informations d'accélération en un seuil réduit, puis la détection d'un événement.
